# EUROPÄISCHE PATENTSCHRIFT

(11) **EP 2 742 669 B1**
(45) Veröffentlichungstag und Bekanntmachung des Hinweises auf die Patenterteilung: **11.03.2015**
(21) Anmeldenummer: 12745785.1
(22) Anmeldetag: 04.08.2012
(51) Int. Cl.: H04L 29/08, G06F 17/30

(54) **VERFAHREN ZUM BEREITSTELLEN EINER SIGNALAUSGABE AUF GRUNDLAGE EINER HAUPTDATEI UND EINER MEHRZAHL VON NEBENDATEIEN, SOWIE FAHRZEUG**
METHOD FOR PROVIDING A SIGNAL OUTPUT ON THE BASIS OF A MAIN FILE AND A PLURALITY OF SECONDARY FILES, AND MOTOR VEHICLE
PROCÉDÉ DE FOURNITURE D'UNE SORTIE DE SIGNAL SUR LA BASE D'UN FICHIER PRINCIPAL ET UNE PLURALITÉ DE FICHIERS SECONDAIRES, ET VÉHICULE

(30) Priorität: 10.08.2011 DE 102011109917
(43) Veröffentlichungstag der Anmeldung: 18.06.2014
(73) Patentinhaber: Audi AG, 85045 Ingolstadt (DE)
(72) Erfinder: WISCHHOF, Lars, 85051 Ingolstadt (DE); BEZOLD, Matthias, Dr., 91080 Spardorf (DE)
(74) Vertreter: Brandt, Kai
(86) Internationale Anmeldenummer: PCT/EP2012/003341
(87) Internationale Veröffentlichungsnummer: WO 2013/020691

(56) Entgegenhaltungen:
- US-A1- 2005 131 900
- KELLY T: "Thin-client Web access patterns: Measurements from a cache-busting proxy", COMPUTER COMMUNICATIONS, ELSEVIER SCIENCE PUBLISHERS BV, AMSTERDAM, NL, Bd. 25, Nr. 4, 1. März 2002 (2002-03-01), Seiten 357-366, XP004327033, ISSN: 0140-3664, DOI: 10.1016/S0140-3664(01)00407-8
- SIMONDS C: "Transportation IT - Software for the next-generation automobile", IT PROFESSIONAL, IEEE SERVICE CENTER, LOS ALAMITOS, CA, US, Bd. 5, Nr. 6, 1. November 2003 (2003-11-01), Seiten 7-11, XP011104309, ISSN: 1520-9202, DOI: 10.1109/MITP.2003.1254962
- JAMEEL A ET AL: "Internet multimedia on wheels: connecting cars to cyberspace", INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9. November 1997 (1997-11-09), Seiten 637-642, XP010270841, DOI: 10.1109/ITSC.1997.660548 ISBN: 978-0-7803-4269-9
- NELSON E C ET AL: "An embedded architectural framework for interaction between automobiles and consumer devices", REAL-TIME AND EMBEDDED TECHNOLOGY AND APPLICATIONS SYMPOSIUM, 2004. PR OCEEDINGS. RTAS 2004. 10TH IEEE TORONTO, CANADA 25-28 MAY 2004, PISCATAWAY, NJ, USA,IEEE, 25. Mai 2004 (2004-05-25), Seiten 192-199, XP010711295, DOI: 10.1109/RTTAS.2004.1317264 ISBN: 978-0-7695-2148-0
- JAN CUAA ÃN ET AL: "Architecture Model and Tools for Perceptual Dialog Systems", 8. September 2008 (2008-09-08), TEXT, SPEECH AND DIALOGUE; [LECTURE NOTES IN COMPUTER SCIENCE], SPRINGER BERLIN HEIDELBERG, BERLIN, HEIDELBERG, PAGE(S) 561 - 568, XP019105424, ISBN: 978-3-540-87390-7 Abschnitte 1 und 3

## Beschreibung

Die Erfindung betrifft ein Verfahren zum Bereitstellen einer Signalausgabe nach Patentanspruch 1.

Somit ist es eine an ein Datennetzwerk angebundene Vorrichtung, die für die Signalausgabe sorgt. Eine Hauptdatei nennt zumindest eine Nebendatei, und zumindest eine Nebendatei bestimmt eine Signalausgabe. Die Hauptdatei und die zumindest eine Nebendatei sind von der Vorrichtung über das Datennetzwerk erhältlich (herunterladbar).

Ein ähnliches Verfahren ist von der Nutzung des Internets (World Wide Web) her bekannt. Die Hauptdatei liegt hierbei zum Beispiel als HTML-Dokument vor, das das Grundgerüst einer graphischen Darstellung angibt, und die Nebendateien repräsentieren einzelne, in die graphische Darstellung einzubindende Bilder oder Icons. Die Nebendateien können auch Video- oder Audiodateien oder dergleichen sein.

Die vorliegende Erfindung soll insbesondere in einem Fahrzeug anwendbar sein. Sie betrifft gleichermaßen auch ein Fahrzeug nach Patentanspruch 7.

In einem Fahrzeug lässt sich das Internet insbesondere zur so genannten "Remote HMI", Fern-Mensch-Maschine-Schnittstelle nutzen. Hierbei geht es darum, die Funktionalitäten der Bedienvorrichtung des Fahrzeugs (des so genannten Infotainmentsystems) nachträglich zu erweitern. Dies ist aber deswegen aufwändig, weil eine Vielzahl von Nebendateien aus dem Internet geladen werden muss. Durch das Herunterladen dieser Nebendateien entstehen nicht unbeträchtliche Kosten für den Datenverkehr. Außerdem kann es beim Herunterladen solcher Nebendateien aus dem Internet bei einem fahrenden Fahrzeug häufig zu Unterbrechungen und Verzögerungen kommen. Wie von der Nutzung des Internets üblicherweise bekannt, behilft man sich damit, die Nebendateien in einem Speicher des Fahrzeugs zwischenzuspeichern. Hierbei tritt jedoch das Problem auf, dass sich eine Nebendatei auch ändern kann: Das Infotainment muss daher feststellen, wann es eine zwischengespeicherte Nebendatei durch eine neue, vom Server des Herstellers bereitgestellte Version ersetzen muss. Hierbei ist es ein gängiges Vorgehen, dass der Server des Herstellers über Felder im Steuerungsprotokoll kennzeichnet, ob sich eine angefragte Nebendatei geändert hat. Im Protokoll http (Hypertext Transfer Protocol) werden dafür beispielsweise die http-Header "ETag", "Modified-Since", "If-Modified-Since", "If-None-Match" verwendet. Nachteil hierbei ist es, dass das Infotainmentsystem für jede Nebendatei einzeln beim Server des Herstellers nachfragen muss, ob sich diese geändert hat. Die Signalausgabe kann erst dann erfolgen, nachdem für jede der Nebendateien einzeln geprüft wurde, ob diese modifiziert wurde. Hinzu kommt, dass im Fahrzeug nicht immer eine zuverlässige Systemzeit vorliegt, was die Verwendung von zeitorientierten Mechanismen für die Aktualisierung des Zwischenspeichers erschwert.

Die US 2005/0131900 A1 beschreibt ein Verfahren zum Beziehen von Daten aus einem Netzwerk. Die auf einem Client-Server vorhandenen Ressourcen werden zusammen mit deren Hash-Werten in einem Speicher abgelegt. Dabei kann der Client-Server auch Teil eines lokalen Netzwerks mit einem Pool-Server sein, in dessen Speicher Kopien aller im lokalen Netzwerk vorhandenen Ressourcen zusammen mit ihren zugehörigen Hash-Werten abgelegt sind. Das lokale Netzwerk kann mit einem größeren Netzwerk, z.B. dem World Wide Web, gekoppelt sein. Wird durch einen Client eine Ressource angefordert, wird dem Client zunächst den der angeforderten Ressource zugeordneten Hash-Wert übermittelt, welcher mit den in seinem Speicher oder dem des Pool-Servers abgespeicherten Hash-Werten verglichen wird. Wird dadurch festegestellt, dass die angeforderte Ressource im eigenen Speicher oder im lokalen Netzwerk vorhanden ist, wird die angeforderte Ressource über das lokale Netzwerk bezogen, ansonst wird die Ressource aus dem größeren Netzwerk heruntergeladen.

KELLY T: "Thin-client Web access patterns: Measurements form a cachebusting proxy", COMPUTER COMMUNICATIONS, ELSEVIER SCIENCE PUBLISHERS BV, AMSTERDAM, NL,Bd. 25, Nr. 4, 1. März 2002, S. 357-366 offenbart ein Verfahren, um redundante Datenübertragung von einem Proxy-Server zu einem Client zu vermeiden. Dabei speichert der Browser ausnahmslos alle empfangenen Daten, stellt gewöhnliche Anfragen an den Proxy-Server und bevor der Proxy-Server die angefragten Daten an den Client übermittelt wird zuerst eine Prüfsumme der entsprechenden Daten übermittelt, die der Browser mit den Prüfsummen der gespeicherten Daten vergleicht.

Es ist somit die Aufgabe der vorliegenden Erfindung, ein Verfahren bzw. ein Kraftfahrzeug so auszubilden, dass die Signalausgabe möglichst schnell und ohne übermäßige Nutzung des Datennetzwerks erfolgen kann.

Diese Aufgabe wird durch ein Verfahren mit den Merkmalen gemäß Patentanspruch 1 und ein Fahrzeug mit den Merkmalen gemäß Patentanspruch 7 gelöst.

Bei dem erfindungsgemäßen Verfahren wird somit die Hauptdatei in einer zu dem Datennetzwerk zugehörigen Datenverarbeitungseinrichtung in der Form bereitgestellt, dass die Hauptdatei zu einer Mehrzahl an Nebendateien jeweils eine Netzwerkadresse angibt, unter der die Nebendatei erhältlich ist, und zusätzlich eine anhand der Daten der Nebendatei nach einer vorbestimmten Vorschrift gebildete Kennung. Ferner erfolgt ein Herunterladen der Hauptdatei durch die Vorrichtung. Schließlich wird zu jeder Nebendatei überprüft, ob eine zuvor heruntergeladene Version in einem Speicher der Vorrichtung abgelegt ist, und falls dies der Fall ist, wird die Kennung nach der vorbestimmten Vorschrift anhand der Nebendatei in dem Speicher gebildet, und falls die so gebildete Kennung mit der entsprechenden Kennung aus der heruntergeladenen Hauptdatei übereinstimmt, wird die Nebendatei aus dem Speicher verwendet, und sonst wird die Nebendatei aus der in der Hauptdatei angegebenen Netzwerkadresse heruntergeladen und nachfolgend verwendet. (Das Herunterladen erfolgt bevorzugt auch dann, wenn gar keine Version der Nebendatei in dem Speicher der Vorrichtung zuvor abgelegt wurde.)

Bei dem erfindungsgemäßen Verfahren muss bei einer Änderung (Aktualisierung) der Nebendatei in der Hauptdatei lediglich die Kennung geändert werden. Die Kennung ist als Datenwert sehr kompakt übermittelbar. Alles weitere kann dann durch die Vorrichtung selbst erfolgen, insbesondere eben in einem Fahrzeug, sodass keine Anfrage mehr dahingehend erforderlich ist, ob die Nebendateien aktuell sind oder nicht; denn diese Information wird eben durch die Kennung implizit übermittelt. Auf diese Weise ist das Verfahren zum Bereitstellen einer Signalausgabe sehr schnell durchführbar und daher insbesondere in einem Fahrzeug leicht einsetzbar.

Bei einer bevorzugten Ausführungsform der Erfindung umfasst das Datennetzwerk das World Wide Web (bzw. betrifft allgemein das Internet). Das Internet besteht als Datennetzwerk ohnehin.

Bei einer weiteren bevorzugten Ausführungsform der Erfindung umfasst die Kennung eine Prüfsumme einer Mehrzahl der Datenwerte und bevorzugt aller Datenwerte der jeweiligen Nebendatei. Vorzugsweise handelt es sich bei der Prüfsumme um einen mit dem SHA-256-Verfahren berechneten Hash-Wert. Eine Prüfsumme ist besonders leicht zu berechnen. Wenn sie aus allen relevanten Datenwerten oder gar allen Datenwerten insgesamt gebildet ist, ist sichergestellt, dass die Nebendatei tatsächlich nicht aktualisiert worden ist.

Das SHA-256-Verfahren ist besonders zuverlässig, und entsprechende Programmbausteine zur Durchführung des Verfahrens sind leicht verfügbar.

Die Hauptdatei gibt bevorzugt an, auf welche Weise Funktionseinheiten des Fahrzeugs zu bedienen sind. Die Hauptdatei muss daher nicht ihrerseits für die Signalausgabe sorgen, sondern beschreibt lediglich als übergeordnete Datei den Bedienablauf selbst. Da die Hauptdatei auf die Nebendateien Bezug nimmt, können ja die Nebendateien die Bereitstellung der Signalausgabe leisten. Bevorzugt umfasst die Nebendatei hierbei eine Bilddatei und/oder eine Audiodatei und/oder eine Videodatei.

Insbesondere in der genannten Anwendung in einem Fahrzeug bei Beschreibung der Bedienweise ist es sinnvoll, wenn die Hauptdatei im SCXML-Format vorliegt, dann muss im Fahrzeug lediglich noch ein Interpreter bereitgestellt werden. Das SCXML-Format oder allgemein jedes XML-Format ermöglicht es, ohne auf Spezifika der Zielvorrichtung, in der die Datei angewendet werden soll, Rücksicht zu nehmen, Befehle und Informationen effektiv mitzuteilen.

Das erfindungsgemäße Fahrzeug umfasst eine Bedienvorrichtung, eine Datenschnittstelle zum drahtlosen Empfang von Dateien aus dem Internet und einen Zwischenspeicher. Die Bedienvorrichtung ist erfindungsgemäß ausgelegt, von einer vorbestimmten Internetadresse eine Hauptdatei zu empfangen und aus dieser Hauptdatei eine Kennung für eine Nebendatei auszulesen. Die Bedienvorrichtung ist ferner dazu ausgelegt, aus dem Zwischenspeicher diese Nebendatei auszulesen, die Kennung nach einer vorbestimmten Vorschrift aus der ausgelesenen Nebendatei zu berechnen und diese mit der ausgelesenen Kennung zu vergleichen. Auf diese Weise ist die Bedienvorrichtung in dem Fahrzeug in der Lage festzustellen, ob die Nebendatei in ihrer aktuellen Version bereits heruntergeladen worden ist oder nicht, und nachfolgende Schritte können vorgesehen werden.

Die Bedienvorrichtung ist dazu ausgelegt, bei Nichtübereinstimmen der berechneten mit der ausgelesenen Kennung aus der Hauptdatei eine Internetadresse auszulesen und von dieser die Nebendatei herunterzuladen.

Das "Ausgelegtsein" der Bedienvorrichtung kann insbesondere durch geeignete Programmierung, also spezifische Software, gewährleistet werden, und es geht jedenfalls über die bloße Eignung der Bedienvorrichtung für den genannten Zweck hinaus.

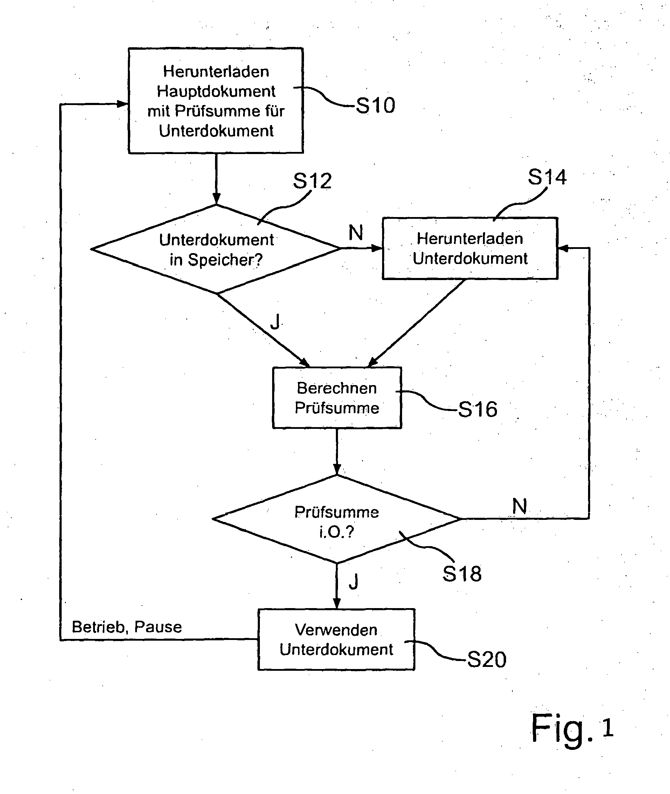

Nachfolgend wird eine bevorzugte Ausführungsform der Erfindung unter Bezug auf die Zeichnung näher beschrieben, in der die einzige
- Fig. 1: ein Flussschaubild zur Erläuterung einer Ausführungsform des erfindungsgemäßen Verfahrens ist.

In einem Fahrzeug soll das Infotainmentsystem zusätzliche Funktionalitäten erhalten, und hierzu soll der Bedienablauf über das Internet bereitgestellt werden.

In einem ersten Schritt S10 erfolgt das Herunterladen eines Hauptdokuments aus dem Internet, und zwar von einer Internetadresse, die dem Infotainmentsystem des Kraftfahrzeugs bekannt ist, und an die es eine entsprechende Anfrage sendet, z. B. durch Drücken eines "Buttons" zum Herunterladen oder durch automatisches Aufrufen beim Start des Fahrzeugs oder einer Funktionseinheit desselben. Das heruntergeladene Hauptdokument wird vorliegend im SCXML-Format bereitgestellt. Es umfasst eine Prüfsumme für ein Unterdokument, also für eine Nebendatei, die bei Umsetzung eines Bedienkonzepts für das Infotainmentsystem gemäß der SCXML-Datei eingesetzt wird, um für eine Signalausgabe zu sorgen, sei dies eine optische, akustische, haptische oder sonstige Signalausgabe.

In einem Schritt S12 wird nun geprüft, ob dieses Unterdokument bereits in einem Zwischenspeicher des Kraftfahrzeugs abgelegt ist, weil es bereits bei einem zuvorigen Durchlauf des Verfahrens abgespeichert wurde. Ist das Dokument nicht abgelegt, wird es aus dem Internet von einer im Hauptdokument zum Unterdokument genannten Internetadresse heruntergeladen, siehe Schritt S14.

Ist das Unterdokument im Speicher abgelegt, so wird aus dem Unterdokument kraftfahrzeugseitig in Schritt S16 die Prüfsumme berechnet, etwa nach dem SHA-256-Verfahren ("Hash-Wert"). In Schritt S18 wird dann geprüft, ob die im Hauptdokument enthaltene Prüfsumme mit der in Schritt S16 berechneten Prüfsumme übereinstimmt. Ist dies nicht der Fall, so bedeutet dies, dass das Unterdokument nicht aktuell genug ist und aktualisiert werden muss, sodass zum Schritt S14 übergegangen wird. Wird die. Frage in Schritt S18 mit "Ja" beantwortet, so wird in Schritt S20 das Unterdokument verwendet. Sind die Schritte S12, S16, S18 und S20 für alle Unterdokumente durchgeführt, so kann das Kraftfahrzeug betrieben werden, eben unter Verwendung der durch das Hauptdokument bereitgestellten Funktionalität, und/oder es kann eine Pause beim Betrieb des Kraftfahrzeugs erfolgen.

Bei einem nächsten Anlass, z. B. wieder dem Start des Kraftfahrzeugs oder einer Funktionseinheit desselben, wird wieder mit Schritt S10 begonnen. Es versteht sich, dass das Unterdokument in der Regel aus dem Speicher genommen werden kann und nicht immer wieder neu heruntergeladen werden muss. Auf diese Weise wird beim Betrieb des Infotainmentssystems des Kraftfahrzeugs Zeit und Rechenkapazität eingespart, und auch der Speicher muss nicht übermäßig voll sein, sondern kann anhand von Kriterien wie Größe oder maximaler Anzahl an zu speichernden Elementen begrenzt werden. Der Zwischenspeicher des Fahrzeugs kann bei Busruhe im Fahrzeug persistiert werden, sodass er auch über mehrere Buszyklen hinaus zur Verfügung steht.

In Fig. 1 ist gezeigt, dass vom Schritt S14 zum Schritt S16 übergegangen wird, dass also noch geprüft wird, ob das Unterdokument korrekt heruntergeladen wurde. Auf diese Prüfung kann gegebenenfalls auch verzichtet werden, es kann von Schritt S14 unmittelbar zu Schritt S20 übergegangen werden (in der Fig. 1 nicht gezeigt).

## Patentansprüche

1. Verfahren zum Bereitstellen einer Signalausgabe durch eine an ein Datennetzwerk angebundene Vorrichtung, bei dem eine Hauptdatei eine Mehrzahl an Nebendateien angibt und die Nebendateien eine Signalausgabe bestimmen, und wobei die Hauptdatei und die Nebendateien von der Vorrichtung über das Datennetzwerk erhältlich sind, umfassend die Schritte
- Bereitstellen der Hauptdatei in einer zu dem Datennetzwerk zugehörigen Datenverarbeitungseinrichtung in der Form, dass die Hauptdatei zu den Nebendateien jeweils angibt:
a) eine Netzwerkadresse, unter der die Nebendatei erhältlich ist, und
b) eine anhand der Daten der Nebendatei nach einer vorbestimmten Vorschrift gebildete erste Kennung,
- Bereitstellen der Vorrichtung in einem Fahrzeug;
- Herunterladen der Hauptdatei durch die Vorrichtung automatisch bei einem Start des Fahrzeugs;
- zu jeder Nebendatei Überprüfen (S12), ob eine zuvor heruntergeladene Version der Nebendatei in einem Speicher der Vorrichtung abgelegt ist und falls dies der Fall ist, Bilden (S16) einer zweiten Kennung nach der vorbestimmten Vorschrift, und falls die so gebildete zweite Kennung mit der entsprechenden ersten Kennung aus der heruntergeladenen Hauptdatei übereinstimmt (S18), Verwenden (S20) der Nebendatei aus dem Speicher und sonst Herunterladen (S14) der Nebendatei von der in der Hauptdatei angegebenen Netzwerkadresse und Verwenden (S20) der heruntergeladenen Nebendatei,
- wobei die Hauptdatei einen Bedienablauf der Vorrichtung beschreibt und die Hauptdatei die Nebendateien angibt, die bei der Umsetzung des Bedienablaufs für die Signalausgabe sorgen.

2. Verfahren nach Anspruch 1,
**dadurch gekennzeichnet, dass**
das Datennetzwerk das World Wide Web umfasst.

3. Verfahren nach Anspruch 1 oder 2,
**dadurch gekennzeichnet, dass**
die Kennung eine Prüfsumme einer Mehrzahl der Datenwerte und bevorzugt aller Datenwerte der jeweiligen Nebendatei umfasst, und dass sie vorzugsweise einen mit dem SHA-256-Verfahren berechneten Hash-Wert umfasst.

4. Verfahren nach Anspruch 3,
**dadurch gekennzeichnet, dass**
die Hauptdatei angibt, auf welche Weise Funktionseinheiten des Fahrzeugs zu bedienen sind.

5. Verfahren nach einem der vorhergehenden Ansprüche,
**dadurch gekennzeichnet, dass**
die Nebendatei eine Bilddatei und/oder eine Audiodatei und/oder eine Videodatei umfasst.

6. Verfahren nach einem der vorhergehenden Ansprüche,
**dadurch gekennzeichnet, dass**
die Hauptdatei im XML-Format und bevorzugt im SCXML-Format bereitgestellt wird.

7. Fahrzeug mit einer Bedienvorrichtung, mit einer Datenschnittstelle zum drahtlosen Empfang von Dateien aus dem Internet und mit einem Zwischenspeicher, wobei
die Bedienvorrichtung ausgelegt ist, automatisch bei einem Start des Fahrzeugs von einer vorbestimmten Internetadresse eine Hauptdatei, die eine Mehrzahl an Nebendateien angibt, anzufragen und zu empfangen (S10), wobei die Hauptdatei einen Bedienablauf der Bedienvorrichtung beschreibt und die Hauptdatei die Nebendateien angibt, die bei der Umsetzung des Bedienablaufs für eine Signalausgabe sorgen, wobei die Bedienvorrichtung weiterhin ausgelegt ist, aus dieser Hauptdatei eine erste Kennung für jede Nebendatei auszulesen, aus dem Zwischenspeicher die Nebendateien auszulesen, für jede in der Hauptdatei angegebene Nebendatei zu überprüfen, ob eine zuvor heruntergeladene Version der Nebendatei im Zwischenspeicher abgelegt ist, und falls dies der Fall ist, eine zweite Kennung nach einer vorbestimmten Vorschrift anhand der jeweils ausgelesenen Nebendateien zu berechnen (S16) und mit der ausgelesenen ersten Kennung zu vergleichen (S18), wobei die Bedienvorrichtung ausgelegt ist, bei Nichtübereinstimmen der berechneten zweiten mit der ausgelesenen ersten Kennung aus der Hauptdatei Internetadressen auszulesen und von diesen die Nebendateien herunterzuladen (S14), wobei die Bedienvorrichtung ausgelegt ist, bei Übereinstimmen der berechneten zweiten mit der ausgelesenen ersten Kennung die Nebendateien aus dem Zwischenspeicher zu verwenden.

## Claims

1. Method for providing a signal output by means of an apparatus linked to a data network, wherein a main file specifies a plurality of secondary files and the secondary files determine a signal output, and wherein the main file and the secondary files may be obtained by the apparatus through the data network, comprising the steps of
- providing the main file in a data processing unit associated with the data network, in a form in which the main file specifies, for each of the secondary files:
a) a network address at which the secondary file can be obtained, and
b) a first identifier formed according to a predetermined rule, using data in the secondary file,
- providing the apparatus in a vehicle;
- the main file being automatically downloaded by the apparatus when the vehicle is started;
- checking (S12), for each secondary file, whether a previously downloaded version of the secondary file is stored in a memory of the apparatus, and if so, forming (S16) a second identifier according to the predetermined rule, and if the second identifier thus formed matches (S18) the corresponding first identifier from the downloaded main file, using (S20) the secondary file from the memory, otherwise downloading (S14) the secondary file from the network address specified in the main file, and using (S20) the downloaded secondary file,
- the main file describing an operator sequence for the apparatus and the main file specifying the secondary files which ensure the signal output on implementation of the operator sequence.

2. Method according to claim 1, **characterised in that** the data network comprises the World Wide Web.

3. Method according to claim 1 or 2, **characterised in that** the identifier comprises a checksum for a plurality of data values and preferably all the data values in the respective secondary file, and **in that** it preferably comprises a hash value calculated by the SHA-256 method.

4. Method according to claim 3, **characterised in that** the main file specifies how functional units of the vehicle are to be operated.

5. Method according to one of the preceding claims, **characterised in that** the secondary file comprises an image file and/or an audio file and/or a video file.

6. Method according to one of the preceding claims, **characterised in that** the main file is provided in the XML format and preferably in the SCXML format.

7. Vehicle having an operating apparatus, with a data interface for wireless reception of files from the internet and with a buffer memory, the operating apparatus being configured, when the vehicle is started up, to request and receive (S10), from a predetermined internet address, a main file that specifies a plurality of secondary files, the main file describing an operator sequence of the operating apparatus and the main file specifying the secondary files which ensure a signal output on implementation of the operator sequence, the operating apparatus further being configured to read, from this main file, a first identifier for each secondary file, to read the secondary files from the buffer memory, to check, for each secondary file specified in the main file, whether a previously downloaded version of the secondary file is stored in the buffer memory and, if so, to calculate (S16) a second identifier according to a predetermined rule, using the particular secondary file selected and to compare it (S18) with the first identifier selected, the operating apparatus being configured, if the second identifier calculated does not match the first identifier selected, to select internet addresses from the main file and to download (S14) the secondary files from these addresses, the operating apparatus being configured, if the second identifier calculated matches the first identifier selected, to use the secondary files from the buffer memory.

## Revendications

1. Procédé pour la fourniture d'une sortie de signal par un dispositif relié à un réseau de données, selon lequel un fichier principal indique une pluralité de fichiers secondaires et les fichiers secondaires déterminent une sortie de signal et selon lequel le fichier principal et les fichiers secondaires peuvent être obtenus par le dispositif par l'intermédiaire du réseau de données,
comprenant les étapes suivantes :
- la fourniture du fichier principal dans un dispositif de traitement de données associé au réseau de données, sous une forme telle que le fichier principal indique à chaque fois pour les fichiers secondaires :
a) une adresse de réseau à laquelle le fichier secondaire peut être obtenu et
b) un premier identificateur formé à l'aide des données du fichier secondaire selon une règle prédéterminée,
- la fourniture du dispositif dans un véhicule ;
- le chargement du fichier principal par le dispositif, et ce automatiquement lors d'un démarrage du véhicule ;
- pour chaque fichier secondaire, la vérification (S12) si une version chargée antérieurement du fichier secondaire est enregistrée dans une mémoire du dispositif et, si c'est le cas, la formation (S16) d'un deuxième identificateur selon la règle prédéterminée et, si le deuxième identificateur ainsi formé coïncide (S18) avec le premier identificateur correspondant issu du fichier principal chargé, l'utilisation (S20) du fichier secondaire issu de la mémoire et sinon le chargement (S14) du fichier secondaire de l'adresse de réseau indiquée dans le fichier principal et l'utilisation (S20) du fichier secondaire chargé,
- le fichier principal décrivant un déroulement d'opérations du dispositif et le fichier principal indiquant les fichiers secondaires qui se chargent de la sortie de signal lors de la mise en oeuvre du déroulement d'opérations.

2. Procédé selon la revendication 1, **caractérisé en ce que** le réseau de données comprend le World Wide Web.

3. Procédé selon la revendication 1 ou 2, **caractérisé en ce que** l'identificateur comprend une somme de contrôle d'une pluralité de valeurs de données et de préférence de toutes les valeurs de données du fichier secondaire respectif et **en ce qu'**elle comprend de préférence une valeur de hachage calculée avec le procédé SHA-256.

4. Procédé selon la revendication 3, **caractérisé en ce que** le fichier principal indique de quelle manière doivent être commandées des unités fonctionnelles du véhicule.

5. Procédé selon l'une des revendications précédentes, **caractérisé en ce que** le fichier secondaire comprend un fichier d'images et/ou un fichier audio et/ou un fichier vidéo.

6. Procédé selon l'une des revendications précédentes, **caractérisé en ce que** le fichier principal est fourni dans le format XML et de préférence dans le format SCXML.

7. Véhicule avec un dispositif de commande, avec une interface de données pour la réception sans fil de fichiers en provenance d'Internet et avec une mémoire intermédiaire,
dans lequel le dispositif de commande est conçu pour interroger et recevoir (S10) automatiquement lors d'un démarrage du véhicule, à partir d'une adresse Internet prédéterminée, un fichier principal qui indique une pluralité de fichiers secondaires, le fichier principal décrivant un déroulement d'opérations du dispositif de commande et le fichier principal indiquant les fichiers secondaires qui se chargent d'une sortie de signal lors de la mise en oeuvre du déroulement d'opérations,
dans lequel le dispositif de commande est aussi conçu pour lire dans ce fichier principal un premier identificateur pour chaque fichier secondaire, pour lire dans la mémoire intermédiaire les fichiers secondaires, pour vérifier pour chaque fichier secondaire indiqué dans le fichier principal si une version chargée antérieurement du fichier secondaire est enregistrée dans la mémoire intermédiaire et, si c'est le cas, pour calculer (S16) un deuxième identificateur selon une règle prédéterminée à l'aide dés fichiers secondaires respectivement lus et le comparer (S18) au premier identificateur lu,
le dispositif de commande étant conçu pour, en cas de non-coïncidence entre le deuxième identificateur calculé et le premier identificateur lu, lire des adresses Internet dans le fichier principal et charger (S14) les fichiers secondaires à partir de celles-ci,
le dispositif de commande étant conçu pour, en cas de coïncidence entre le deuxième identificateur calculé et le premier identificateur lu, utiliser les fichiers secondaires dans la mémoire intermédiaire.
